(19) **Europäisches Patentamt**

**European Patent Office**

**Office européen des brevets**

(11) **EP 1 113 255 A2**

(12) **EUROPÄISCHE PATENTANMELDUNG**

| | |
|---|---|
| (43) Veröffentlichungstag:<br>**04.07.2001 Patentblatt 2001/27** | (51) Int Cl.⁷: $G01M\ 15/00$ |

(21) Anmeldenummer: **00123473.1**

(22) Anmeldetag: **07.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.12.1999 DE 19963225**

(71) Anmelder: **Volkswagen Aktiengesellschaft**
**38436 Wolfsburg (DE)**

(72) Erfinder:
- **Smolka, Helmut**
  **29399 Wahrenholz (DE)**
- **Plückhahn, Mario**
  **06366 Köthen (DE)**
- **Ehlers, Bernd**
  **38110 Braunschweig (DE)**

(54) **Verfahren zum Überwachen des Verbrennungsablaufs in einem Dieselmotor sowie entsprechendes Messsystem**

(57) Erfindungsgemäß wird eine Ionenstrommessung direkt in einem Verbrennungsraum (1) eines Dieselmotors durchgeführt, um abhängig von dem somit gewonnenen Ionenstromsignal eine Aussage über den Verbrennungsablauf in der entsprechenden Verbrennungskammer (1) zu treffen. Infolge von umfangreichen Untersuchungen konnte festgestellt werden, daß durch verschiedenartige Auswertungen des Ionenstromsignals eine Aussage über das Auftreten von Verbrennungsaussetzern, den Verbrennungsbeginn und/oder die Verbrennungsdauer getroffen werden können.

FIG. 1

EP 1 113 255 A2

**Beschreibung**

Die vorliegende Erfindung betrifft ein Verfahren zum Überwachen des Verbrennungsablaufs in einem Dieselmotor sowie ein entsprechendes Meßsystem.

Im Verlauf der letzten Jahre ist das Interesse an der Ionenstrommessung im Bereich der Otto-Motoren gestiegen. So haben neuere Studien gezeigt, daß das Ionenstromsignal benutzt werden kann, um den Druck im Verbrennungsraum (Zylinderdruck) und das lokale Lambda (λ) zu bestimmen und somit die Zündung in Verbrennungsmotoren zu überwachen. Das lokale Lambda gibt Auskunft über das Luft-Kraftstoff-Verhältnis an einem bestimmten lokalen Punkt im Verbrennungsraum.

In der DE 196 05 801 A1 ist ein Ionenstrom-Meßsystem für einen Verbrennungsraum eines Otto-Motors beschrieben, wobei die für den Verbrennungsraum vorgesehene Zündkerze zugleich als Ionenstrom-Meßsensor verwendet wird. Die Ionenstrom-Meßanordnung umfaßt einen als invertierender Verstärker verschalteten Differenzverstärker, dessen invertierender Eingang über einen Widerstand mit seinem Ausgang verbunden ist. Das dem Ausgangssignal des invertierenden Verstärkers entsprechende Ionenstromsignal kann dazu benutzt werden, um das sogenannte Klopfen des entsprechenden Motors zu detektieren und über eine geeignete Steuerung des Zündzeitpunkts eine entsprechende Klopfregelung aufzubauen. Darüber hinaus wird in dieser Druckschrift vorgeschlagen, das Ionenstromsignal zur Erkennung von Zündaussetzern oder zur Erkennung der Nockenwellenstellung zu verwenden.

Im Gegensatz zu Otto-Motoren wurde bisher noch kein geeignetes Ionenstrom-Meßsystem zur Anwendung direkt im Verbrennungsraum eines Dieselmotors vorgeschlagen. Als Dieselmotor wird allgemein ein Verbrennungsmotor verstanden, bei dem sich der in den Verbrennungsraum eingespritzte flüssige Kraftstoff an einer Luftladung entzündet, nachdem diese im wesentlichen durch eine Verdichtung auf eine für die Einleitung der Zündung hinreichend hohe Temperatur gebracht worden ist.

Für Dieselmotoren ist bisher lediglich die Verwendung von Zylinderdrucksensoren oder Nadelbewegungsfühlern bekannt. Mit Hilfe eines Zylinderdrucksensors kann der Zylinderdruck im entsprechenden Verbrennungsraum erfaßt und davon abhängig auf verschiedene Verbrennungsparameter geschlossen werden. Zylinderdrucksensoren sind jedoch sehr kostspielig und haben Nachteile, wenn beispielsweise eine Voreinspritzung stattfindet, da es schwierig ist, aus dem erfaßten Drucksignal in Echtzeit eine Trennung von Voreinspritzung und Haupteinspritzung vorzunehmen. Mit Hilfe eines in der Einspritzdüse angeordneten Nadelbewegungsfühlers kann der genaue Einspritzbeginn erfaßt werden. Die Nachteile eines Nadelbewegungsfühlers sind jedoch seine relativ hohen Kosten und seine relativ große Komplexität. Zudem ist nachteilig, daß lediglich der Start einer Einspritzung und nicht der Start der Verbrennung detektiert werden kann.

In Dieselmotoren werden Ionenstrommessungen bisher nur an der sogenannten Common-Rail-Maschine vorgenommen. Diese Technologie ermöglicht die Vor- und Haupteinspritzung in Echtzeit. Der Verbrennungsbeginn kann auf diese Weise für alle Lastfälle und Drehzahlen bestimmt werden. Darüber hinaus ermöglicht die Ionenstrommessung die Korrektur von Zündverzugsänderungen, die beispielsweise durch andere Cetanzahlen des Kraftstoffs verursacht werden. Als Zündverzug ist die Zeit zwischen dem Einspritzbeginn und dem Beginn des Druckanstiegs im entsprechenden Verbrennungsraum definiert, wobei für den Verbrennungsablauf eines Dieselmotors ein möglichst geringer Zündverzug wichtig ist.

Für eine effektive und genaue Steuerung des Verbrennungsprozesses ist jedoch vorteilhaft, wenn die hierzu erforderlichen Meßgrößen direkt im Verbrennungsprozeß detektiert werden können.

Der vorliegenden Erfindung liegt daher die Aufgabe zugrunde, ein Verfahren zum Überwachen des Verbrennungsablaufs in einem Dieselmotor sowie ein entsprechendes Meßsystem vorzuschlagen, womit eine Überwachung des Verbrennungsablaufs direkt im Verbrennungsraum eines Dieselmotors möglich ist.

Diese Aufgabe wird gemäß der vorliegenden Erfindung durch ein Verfahren mit den Merkmalen des Anspruches 1 bzw. ein Meßsystem mit den Merkmalen des Anspruches 13 gelöst. Die Unteransprüche definieren jeweils bevorzugte und vorteilhafte Ausführungsformen der vorliegenden Erfindung.

Erfindungsgemäß wird zur Überwachung des Verbrennungsablaufs in einem Dieselmotor eine Ionenstrommessung durchgeführt. Durch umfangreiche Untersuchungen konnte festgestellt werden, daß durch verschiedene Auswertungsmöglichkeiten des durch die Ionenstrommessung gewonnenen Ionenstromsignals Aussagen über mögliche Verbrennungsaussetzer, den Verbrennungsbeginn und/oder die Verbrennungsdauer getroffen werden können.

Zur entsprechenden Erfassung und Auswertung des Ionenstromsignals wird ein geeigneter Aufbau eines Meßsystems vorgeschlagen.

Die Vorteile der erfindungsgemäß durchgeführten Ionenstrommessung direkt in einem Verbrennungsraum oder Zylinder eines Dieselmotors sind u.a., daß der Verbrennungsablauf zylinderselektiv überwacht werden kann, so daß eine zylinderselektive Erkennung von Verbrennungsaussetzern und/oder eine zylinderselektive Einflußnahme auf Abgas, Leistung und Verbrauch durch Erkennen des Verbrennungsbeginns in dem jeweiligen Zylinder möglich ist.

Die Erfindung wird nachfolgend unter Bezugnahme auf die Zeichnung anhand eines bevorzugten Ausführungsbeispiels beschrieben.

Fig. 1 zeigt einen Teil einer erfindungsgemäßen Ionenström-Meßschaltung,

Fig. 2 zeigt den grundsätzlichen Aufbau eines erfindungsgemäßen Ionenstrom-Meßsystems,

Fig. 3 zeigt eine vollständige erfindungsgemäße Ionenstrom-Meßschaltung,

Fig. 4A-4C zeigen Darstellungen zur Erläuterung der Auswertung des Ionenstromsignals gemäß einem ersten Ausführungsbeispiel der vorliegenden Erfindung,

Fig. 5 zeigt eine Darstellung zur Erläuterung der Auswertung des Ionenstromsignals gemäß einem zweiten Ausführungsbeispiel der vorliegenden Erfindung, und

Fig. 6 zeigt eine Darstellung zur Erläuterung der Auswertung des Ionenstromsignals gemäß einem dritten Ausführungsbeispiel der vorliegenden Erfindung.

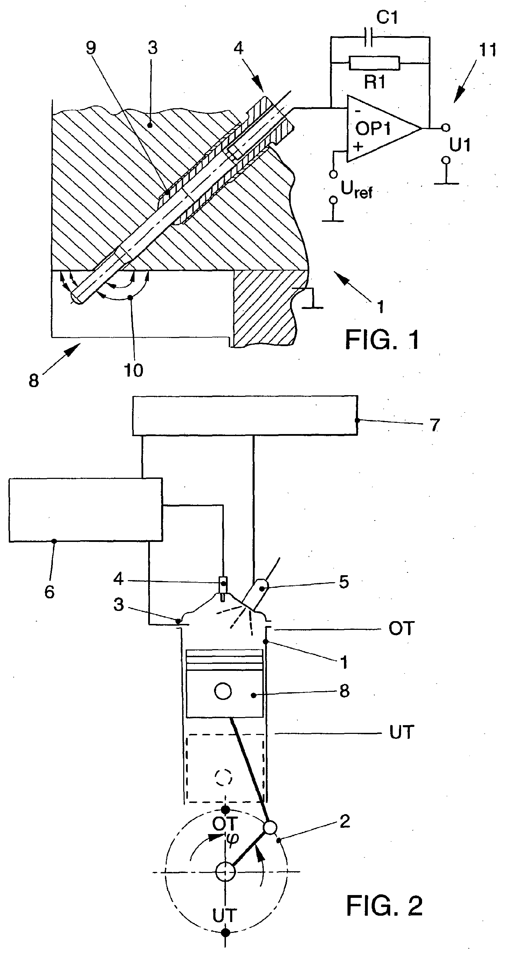

In Fig. 2 ist der grundsätzliche Aufbau eines erfindungsgemäßen Meßsystems anhand eines Zylinders 1 eines Dieselmotors dargestellt. Ein in dem Zylinder 1 befindlicher Kolben 8 wird über eine Kurbelwelle 2 des Dieselmotors angetrieben. Wird beispielsweise angenommen, daß der Dieselmotor mit vier Takten arbeitet, erreicht die Kurbelwelle 2 und der Kolben 8 innerhalb eines Arbeitszyklusses genau zweimal den sogenannten oberen Totpunkt OT und den unteren Totpunkt UT, was zwei vollständigen Umdrehungen der Kurbelwelle 2 entspricht. In der Kraftfahrzeugtechnik werden die Drehwinkel $\varphi$ der Kurbelwelle 2 in Grad Kurbelwinkel (°KW) angegeben.

Im Bereich des Zylinderkopfs oder der Zylinderkopfdichtung ist mindestens ein Ionenstromsensor untergebracht, wobei über mindestens eine Kathode 3 und Anode 4 der im Zylinder während eines Verbrennungsvorgangs auftretenden Ionenstrom erfaßt und einer Ionenstrom-Auswertungseinheit 6 zugeführt wird. Als Ionenstromsensor kann insbesondere die dem Zylinder 1 zugeordnete Zündkerze verwendet werden. Ebenso ist die Verwendung einer Glühstiftkerze oder die Anordnung entsprechender Sensoren im Zylinderkopf oder in der Zylinderkopfdichtung möglich.

Die Ionenstrom-Auswertungseinheit 6 wertet den erfaßten Ionenstrom aus und schließt davon abhängig auf den augenblicklichen Verbrennungszustand im Zylinder 1. Über ein entsprechendes Steuersignal wird ein Motorsteuergerät 7 angesteuert, welches davon abhängig ein mit einer Dieselleitung gekoppeltes Einspritzventil 5 des Zylinders 1 ansteuert, um die dem Zylinder 1 zugeführte Gemischzusammensetzung entsprechend zu beeinflussen.

In Fig. 1 ist die zum Erfassen des Ionenstrom-Meßsignals vorgesehene Meßschaltung 11 der Ionenstrom-Auswertungseinheit 6 detailliert dargestellt.

Ein Ionenstrom kann gemessen werden, wenn sich zwischen zwei Meßelektroden (Anode und Kathode) eine Flamme befindet, die ein Kohlenwasserstoffe enthaltendes Gemisch enthält. Im vorliegenden Fall wird das Glührohr bzw. dessen Spitze einer entsprechend modifizierten und mit einer Isolation 9 umgebenen Glühstiftkerze als Anode 4 und der Zylinderkopf (bzw. das Motorgehäuse) als Kathode 3 genutzt.

Über die Glühstiftkerze wird der Widerstand Rion des von den Meßelektroden umgebenen Gasgemisches gemessen, der sich je nach Verbrennungsparameter und demzufolge je nach Ionenstrom 10 ändert.

Die Meßschaltung umfaßt einen sehr empfindlichen Operationsverstärker OP1 (beispielsweise vom Typ OP177), der durch seinen geringen Eingangswiderstand auch sehr kleiner Signale verstärkt und somit sehr gut zur Erfassung des geringen Ionenstromsignals geeignet ist. Der Operationsverstärker OP1 ist als gegengekoppelter nicht-invertierender Verstärker verschaltet. An den nicht-invertierenden Eingang des Operationsverstärkers OP1 wird von einer noch nachfolgend näher beschriebenen Referenzspannung-Erzeugungsschaltung eine bekannte Spannung Uref angelegt, die als Referenzspannung dient und über die gesamte Zeit der Ionenstrom-Signalaufnahme konstant bleibt. Der Ausgang des Operationsverstärkers OP1 ist mit seinem invertierenden Eingang über ein Gegenkopplungsnetzwerk bestehend aus einer als Tiefpaß wirkenden Parallelschaltung eines Kondensators C1 mit einem Widerstand R1 verbunden.

Wird der Widerstand des von den Meßelektroden 3, 4 umgebenen Gasgemisches mit Rion bezeichnet, ergibt sich für den Verstärkungsfaktor V des Operationsverstärkers OP1:

$$V = \frac{U1}{Uref} = 1 + \frac{R1}{Rion}$$

Für die Ausgangsspannung U1 der Meßschaltung gilt somit:

$$U1 = Uref \cdot \left( 1 + \frac{R1}{Rion} \right)$$

Der Widerstand Rion ändert sich proportional zum Ionenstrom. Demzufolge wird der Verstärkungsfaktor V durch die Veränderung von Rion bestimmt, wobei die Verstärkung V umgekehrt proportional zu Rion ist.

Bei Durchlauf eines kompletten Kennlinienfeldes, welche alle Belastungsmöglichkeiten des Dieselmotors beinhaltet, wurde der Widerstand R1 mit 40 kΩ als ausreichend befunden, um das Ausgangssignal in guter Qualität darstellen zu können. Der Kondensator C1 ist lediglich für eine Filterung von hochfrequenten Störungen mit Hilfe des somit gebildeten Tiefpaßfilters vorgesehen. Infolge von Testläufen hat sich eine Grenzfrequenz $f_G = \frac{1}{2\pi \cdot R1 \cdot C1}$ des Tiefpaßfilters zwischen 45kHz und 50kHz als für eine gut sichtbare Darstellung des Ionenstromsignals hinreichend herausgestellt. Ein in der Praxis geeigneter Wert für C1 ist daher z.B. 82pF.

Die Referenzspannung Uref wird als bekannte und konstante Meßspannung durch Rion beeinflußt bzw. verstärkt und am Ausgang in Form der Ausgangsspannung U1 abgegriffen. Auf diese Weise wird die Referenzspannung um den Ionenstromanteil verstärkt.

Ausgangsseitig muß die Referenzspannung Uref vom verstärkten Ionenstromsignal U1 wieder subtrahiert werden, um das eigentliche Ionenstromsignal zu erhalten.

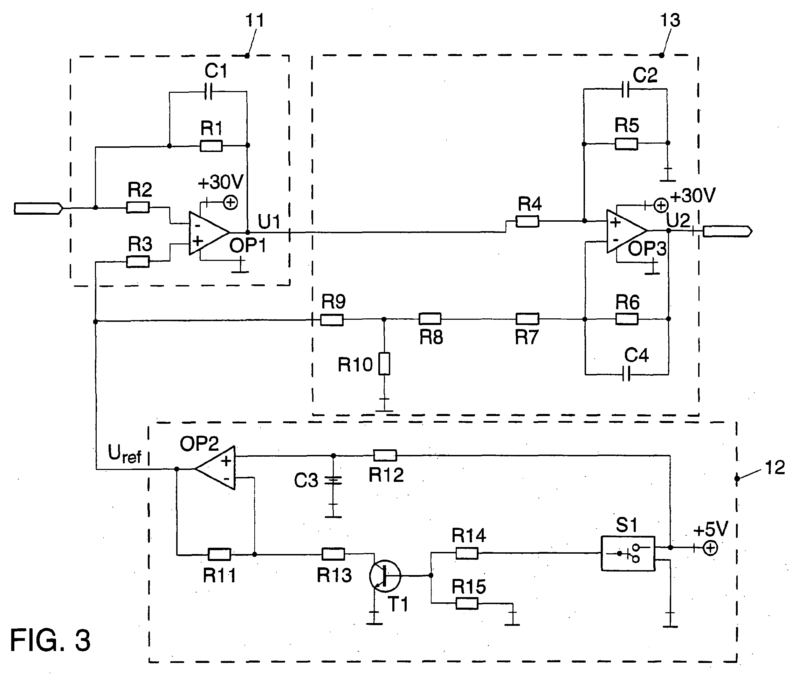

In Fig. 3 ist die Meßanordnung komplett dargestellt, wobei neben der bereits zuvor beschriebenen und in Fig. 1 gezeigten Meßschaltung 11 (mit zusätzlichen Widerständen R2 und R3) auch eine Schaltung 12 zur Erzeugung der Referenzspannung Uref sowie eine Schaltung 13 zur Reduzierung der Referenzspannung Uref von der Ausgangsspannung U1 der Meßschaltung 11 dargestellt ist.

Die Referenzspannung-Erzeugungsschaltung 12 umfaßt einen nicht-invertierenden Operationsverstärker OP2. Die von dem Operationsverstärker OP2 bereitgestellte Referenzspannung kann durch Veränderung der am Eingang der Schaltung 12 angelegten Spannung (im vorliegenden Fall 5V) oder des Widerstandsverhältnisses zwischen R11 und R13 auf einen anderen gewünschten Spannungswert eingestellt werden. Der nicht-invertierende Eingang des Operationsverstärkers OP2 ist mit der zu verstärkenden Spannung (hier 5V) beaufschlagt und wird gegen hochfrequente Störungen mittels eines Tiefpasses R12, C3 gesichert. Die Grenzfrequenz des Tiefpasses kann beispielsweise ca. 195Hz betragen. Der Widerstand R12 sollte möglichst gering gewählt werden, damit der Eingangsstrom des Operationsverstärkers keinen zusätzlichen Offsetfehler bewirkt.

Am Eingang der Referenzspannung-Erzeugungsschaltung 12 befindet sich ein Schalter S1. Ist der Schalter S1 derart geschaltet, daß an ihm die Eingangsspannung (5V) anliegt, wird ein Transistor T1 über einen Widerstand R14 leitend geschaltet, so daß der mit dem Operationsverstärker OP2 verbundene Widerstand R13 auf das Massepotential geschaltet wird. Durch eine geeignete Auslegung des Widerstandsverhältnisses der Widerstände R11 und R13 kann in diesem Fall eine gewünschte Verstärkung $V = 1 + \frac{R11}{R13}$ der Eingangsspannung erzielt werden, wobei die verstärkte Eingangsspannung als Referenzspannung Uref der Meßschaltung 11 zugeführt wird. Mit R11 = 30kΩ und R13=10kΩ wird beispielsweise bei dem dargestellten Beispiel die Erzeugung einer Referenzspannung Uref = 20V erreicht.

Ist der Schalter S2 hingegen wie in Fig. 3 gezeigt auf das Massepotential geschaltet, sperrt der Transistor T1 und der Wiederstand R13 wirkt als unendlich großer Widerstand, so daß der Operationsverstärker OP2 als Spannungsfolger fungiert und somit die Eingangsspannung unverstärkt ausgibt. Durch den Schalter S1 kann daher die Referenzspannung Uref zwischen 5V und beispielsweise 20V umgeschaltet werden. In der Praxis hat sich herausgestellt, daß die Referenzspannung Uref=20V für eine rauscharme Darstellung des Ionenstromsignals geeignet ist.

Wie bereits erwähnt worden ist, muß die Referenzspannung Uref wieder von dem verstärkten Ausgangssignal der Meßschaltung 11 subtrahiert werden, da auch die Referenzspannung Uref durch den Einfluß von Rion durch den Operationsverstärker OP1 verstärkt worden ist.

Die entsprechende Referenzspannung-Subtrahierschaltung 13 umfaßt gemäß Fig. 3 einen als Differenzverstärker wirkenden Operationsverstärker OP3 mit einem Rückkopplungstiefpaß R6, C4, wobei der nicht-invertierende Eingang des Operationsverstärkers OP3 über einen weiteren Tiefpaß C2, R5 mit dem Massepotential verbunden ist. Die Kondenstoren C2 und C4 sind lediglich zur Ausfilterung von hochfrequenten Störungen vorgesehen. In beiden Fällen ist eine Grenzfrequenz von 45kHz bis 50kHz für eine gut sichtbare Darstellung des Ionenstromsignals ausreichend.

Die Widerstände R9 und R10 bilden einen Spannungsteiler, der lediglich zur Prüfung der Funktionalität der Schaltung vorgesehen ist. Dieser Spannungsteiler bewirkt am Schaltungsausgang einen kleinen Spannungsoffset, so daß auf einen Defekt der Schaltung geschlossen werden kann, wenn dieser Spannungsoffset auch bei Nichtanliegen eines Ionenstromsignals nicht vorhanden ist. Die zudem in Fig. 3 gezeigten Widerstände R2, R3, R4, R7, R8, R14 und R15 dienen demSchutz der Schaltung und verhindern, daß eventuell auftretende Spannungsspitzen die Operationsverstärker bzw. die Schaltung zerstören.

Das am Ausgang des Operationsverstärkers OP3 auftretende Spannungssignal U2 ist ein Maß für den Widerstandswert Rion und damit für den Ionenstrom. Der Widerstandswert Rion kann wie folgt aus der Spannung U2 abgeleitet werden:

$$Rion = \frac{Uref \cdot R1}{U2}$$

Für den Wert des Ionenstroms Iion gilt dann:

$$Iion = \frac{U2}{Rion}$$

Nachdem zuvor der Aufbau der Meßanordnung für eine Ionenstrommessung im Verbrennungsraum eines Dieselmotors beschrieben worden ist, sollen nachfolgend verschiedene Möglichkeiten für die Verwertbarkeit des somit gewonnenen Ionenstromsignals für eine bessere Steuerung des Verbrennungsvorgangs des Dieselkraftstoffs im Verbrennungsraum erläutert werden.

Eine erste Möglichkeit ist die Auswertung der sogenannten Ionenstrom-Schleppkurve, um Verbrennungsaussetzer erkennen zu können.

Der sogenannte Schleppbetrieb liegt vor, wenn keine Einspritzung von Kraftstoff erfolgt, d.h. die Einspritzmenge me=0mg/Hub beträgt. Im Schleppbetrieb weist das Ionenstromsignal keinen Anstieg seiner Amplitude auf.

Kurz nach dem Start des Motors wurde das von der in Fig.1 bzw. Fig. 3 gemessene Ionenstromsignal mit einer entsprechenden Glühstiftkerze bei einer relativ niedrigen Drehzahl (n=1000U/min) und ohne Einspritzung von Kraftstoff (me=0mg/Hub) gemessen.

Wird im Schleppbetrieb die Drehzahl erhöht, steigt die Amplitude des Ionenstromsignals. In Versuchen konnte jedoch im Schleppbetrieb kein qualitativ gut verwertbares Ionenstromsignal detektiert werden, weil es keine Verbrennung des Diesel-Luft-Gemischs gab. Es erfolgte lediglich eine Temperaturerhöhung, die durch die gestiegene Drehzahl und die Komprimierung der Luft hervorgerufen wurde. Daraus kann gefolgert werden, daß die Schleppkurve u.a. vom Zylinderdruck und von der Temperatur im Verbrennungsraum des Dieselmotors abhängig ist. Die Temperatur hängt wiederum von der Drehzahl bzw. dem thermodynamischen Zustand (Arbeitspunkt) des Dieselmotors und der zeitlichen Belastung ab.

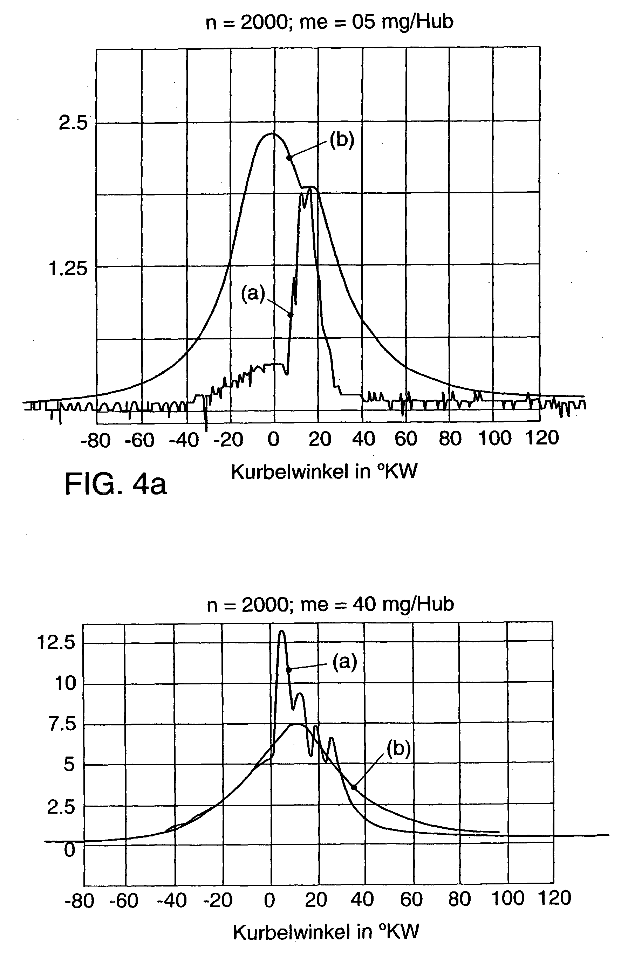

Die Schleppkurve ist auch bei Einspritzmengen größer als 0 mg/Hub zu sehen. Sie tritt dort am Beginn des Ionenstromsignals auf. Ein entsprechendes Beispiel hierfür ist in Fig. 4A dargestellt, wobei neben dem Ionenstromsignal (a) (Einheit $10^{-7}$ S) auch der Verlauf des Zylinderdrucksignals (b) (Einheit bar) für n = 2000 U/min und me = 5 mg/Hub gezeigt ist. Der Anstieg der Ionenstrom-Schleppkurve ähnelt dem Anstieg der Zylinderdruckkurve.

Aus Fig. 4B ist ersichtlich, daß diese Ähnlichkeit nicht nur im Schleppbetrieb, sondern auch bei Einspritzmengen von me>0mg/Hub (im vorliegenden Beispiel Drehzahl n = 2000 U/min und Einspritzmenge me = 40mg/Hub) relevant ist, wobei hierzu in Fig. 4B der Bereich zwischen -60°KW und 0°KW genauer zu beachten ist.

Des weiteren wurden zur Ermittlung der zeitlichen Abhängigkeit der Ionenstrom-Schleppkurve mehrere Messungen in einem bestimmten zeitlichen Abstand durchgeführt. Dabei wurde mit jeder Messung ein Anstieg des Ionenstromsignals festgestellt, der ähnlich zu dem Anstieg des Zylinderdrucksignals ist. Diese Erkenntnis kann dazu genutzt werden, aus dem Ionenstromsignal denjenigen Anteil herauszufiltern, der durch die mit fortdauerndem Betrieb auftretende Partikelbildung an der Glühstiftkerzenspitze, die Temperatur und den Zylinderdruck beeinflußt wird, um somit ein ideales gutes Ionenstromsignal zu erhalten. Die Partikelbildung beeinflußt die Leitfähigkeit der als Meßsonde dienenden Glühstiftkerze. Einen weiteren Anstieg der Amplitude der Ionenstrom-Schleppkurve konnte beobachtet werden, wenn der Dieselmotor eine plötzliche Zufuhr von höheren Einspritzmengen oder einer höheren Drehzahl bekam. Umgekehrt senkte sich die Amplitude des Ionenstromsignals bei geringerer Einspritzmenge oder Drehzahl wieder ab.

Die zuvor beschriebene Filterung der Ionenstrom-Schleppkurve wird als Schleppkurven-Filterung bezeichnet und kann mit einem numerischen Verfahren unter Anwendung eines digitalen Signalprozessors durchgeführt werden.

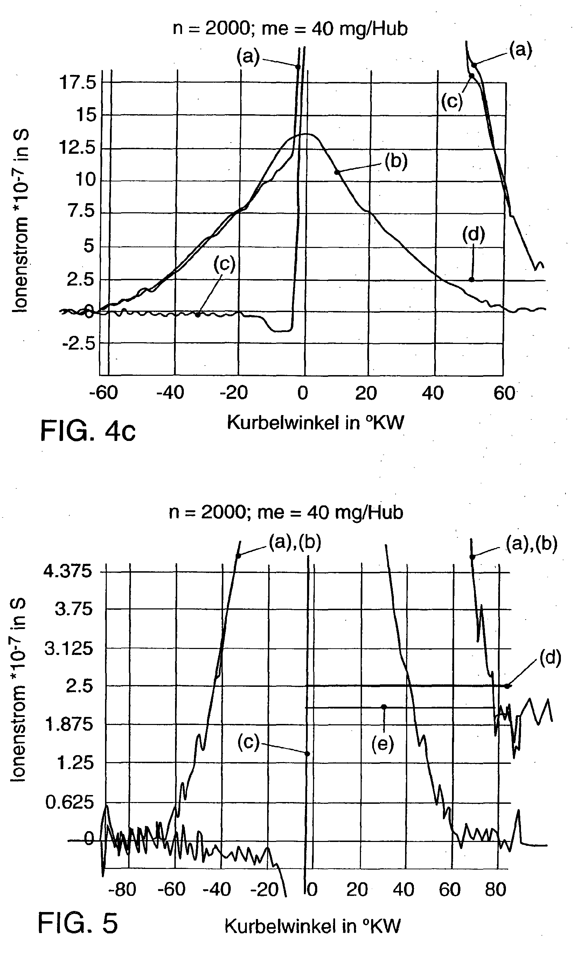

Durch die Schleppkurven-Filterung am realen Ionenstromsignal ist eine Erkennung von Verbrennungsaussetzern möglich. Wird bei einer Einspritzmenge von me = 0 mg/Hub die dabei detektierte Ionenstrom-Schleppkurve numerisch gefiltert, hat das dadurch erhaltene gefilterte ideale Ionenstromsignal eine sehr geringe Amplitude oder die Amplitude Null. Wird anschließend, wie in Fig. 4C gezeigt ist, eine Schwelle (d) (beispielsweise bei $2,5 \cdot 10^{-7}$ S) definiert, kann eine Verbrennung durch einen Vergleich der Amplitude des gefilterten Ionenstromsignals mit der Schwelle erkannt werden. Bleibt die Amplitude des gefilterten Ionenstromsignals, welches in Fig. 4C durch die Kennlinie (c) dargestellt ist, unter dieser Schwelle (d), erfolgte keine Verbrennung. Liegt die Amplitude des gefilterten Ionenstromsignals (c) hingegen über der Schwelle (d), erfolgte eine Verbrennung. Es ist vorteilhaft, wenn die Schwelle (d) nicht genau auf den Wert Null gelegt wird, da dann der Einfluß des Signalrauschens eliminiert werden kann.

Darüber hinaus kann das Ionenstromsignal auch zur Bestimmung der Verbrennungsdauer und des Verbrennungsbeginns genutzt werden.

Zu diesem Zweck kann das real gemessene Ionenstromsignal wiederum einer Ionenstrom-Schleppkurvenfilterung unterzogen werden, um ein qualitativ gut verwertbares Ionenstromsignal zu erhalten. Die Amplitude des somit gewonnenen idealen Ionenstromsignals weist kurz vor dem oberen Totpunkt OT bei 0°KW einen steilen Anstieg auf, so daß geschlußfolgert werden kann, daß an diesem Punkt ein Ionenstrom zu fließen beginnt, d.h. an diesem Punkt beginnt eine Verbrennung.

Um den Abstand dieses Signalanstiegs vom oberen Totpunkt OT bei 0°KW zu bestimmen, kann an die Kurve des idealen Ionenstromsignals eine Sekante beispielsweise bei ca. 2% des Ionenstromsignal-Maximums gelegt werden. Es ist vorteilhaft, die Sekante nicht auf Null zu legen, um eine Verfälschung durch Signalrauschen zu vermeiden. Durch Ermittlung des Beginns und der Länge der Sekante kann der Verbrennungsbeginn und die Verbrennungsdauer festgestellt werden.

In Fig. 5 ist vergrößert ein Ausschnitt des real detektierten Ionenstromsignals (a), des Zylinderdrucksignals (b) und des gefilterten Ionenstromsignals (c) dargestellt. Darüber hinaus ist die bereits anhand Fig.

4C erläuterte Schwelle (d) bei 2,5·10⁻⁷ S und die zuvor erläuterte 2%-Sekante (e) dargestellt. Aus Fig. 5 ist ersichtlich, daß die Wahl von 2% des Maximums des idealen Ionenstromsignals ausreichend ist, um nicht vom vorhandenen Signalrauschen gestört zu werden.

Es ist jedoch anzumerken, daß durch die Ionenstrommessung nur derjenige Teil der Verbrennung erfaßt wird, der die Meßsonde bzw. die Glüstiftkerze tatsächlich erreicht.

Demzufolge ist die Form des Ionenstromsignals, welche den Beginn, die Dauer und das Ende des Verbrennungsvorgangs darstellt, von dem Zeitpunkt abhängig, bei dem die Verbrennung bzw. die Flamme die Meßsonde erreicht. Durch die zuvor beschriebene Sekantenauswertung des Ionenstromsignals kann somit zwar grundsätzlich der Verbrennungsbeginn und die Verbrennungsdauer ermittelt werden. Die dabei ermittelten Werte unterliegen jedoch wegen der im Verbrennungsraum eines Dieselmotors herrschenden physikalischen, chemischen und konstruktiven Bedingungen einer gewissen Streuung, die berücksichtigt werden muß.

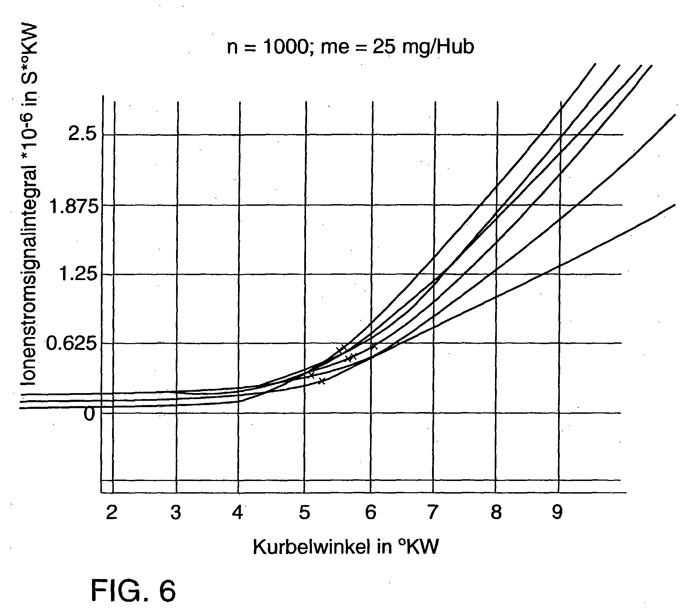

Abschließend soll eine weitere Möglichkeit zur Auswertung des Ionenstromsignals unter Bezugnahme auf Fig. 6 erläutert werden, wobei anhand der Auswertung des Ionenstromintegrals eine Aussage über den Verbrennungsbeginn und die Verbrennungsdauer getroffen wird.

Zur Berechnung des Ionenstromintegrals wird vorteilhafterweise das ideale Ionenstromsignal benutzt, welches einer Schleppkurven-Filterung unterzogen worden ist. Werden verschiedene Messungen bei konstanter Drehzahl und konstanter Einspritzmenge durchgeführt, erkennt man, daß die jeweils gewönnen Ionenstromintegrale in ihrem Endwert relativ stark zyklisch schwanken und daher eine Verwertung des Endbereichs des Ionenstromintegrals nicht sinnvoll ist.

Bei einem relativ niedrigen Wert des Ionenstromintegral-Maximums ist jedoch die Streuung deutlich geringer. In Fig. 6 ist das erste Drittel von sechs nacheinander aufgenommenen Ionenstromintegralkurven im Wertebereich um 2% des Maximal- oder Endwerts der einzelnen Ionenstromintegrale dargestellt. Aus Fig. 6 ist ersichtlich, daß die einzelnen markierten Punkte, die dem 2%-Wert des jeweiligen Ionenstromintegral-Endwerts entsprechen, relativ dicht beieinander liegen.

Wie auch der vorhergehenden Beschreibung entnommen werden konnte, kann gesagt werden, daß der Beginn des Amplitudenanstiegs des Ionenstromintegrals mit dem Verbrennungsbeginn zusammenfällt. Aus dem Beginn des Amplitudenanstiegs des gemäß dem Heizgesetz gebildeten Integrals kann ebenfalls die Schlußfolgerung gezogen werden, daß der Beginn der Verbrennung vorliegt. Aus diesem Grunde wurden die für verschiedene Drehzahlen n und Einspritzmengen me gewonnenen 2%-Werte des Ionenstromintegrals (bezogen auf das Maximum des Ionenstromintegrals) mit den entsprechenden 5%-Werten des Heizgesetz-Integrals (bezogen auf das Maximum des Heizgesetz-Integrals) verglichen. Das Ergebnis war, daß zwar bei jedem detektierten Arbeitspunkt eine gewisse Streuung der Meßpunkte auftrat. Dennoch war die Übereinstimmung so groß, daß gesagt werden kann, daß durch Auswertung des 2%-Werts des Ionenstromintegrals der Verbrennungsbeginn ermittelt werden kann, wenn die erwähnte Streuung mitberücksichtigt wird.

Die obige Beschreibung macht deutlich, daß durch die zuvor erläuterte Ionenstrommessung in einem Dieselmotor sowie die Auswertung des detektierten Ionenstromsignals die Möglichkeit besteht, Verbrennungsabläufe zu überwachen und zu steuern.

## BEZUGSZEICHENLISTE

| | |
|---|---|
| 1 | Verbrennungsraum (Zylinder) |
| 2 | Kurbelwelle |
| 3 | Kathode |
| 4 | Anode |
| 5 | Einspritzventil |
| 6 | Ionenstromauswertungseinheit |
| 7 | Motorsteuergerät |
| 8 | Kolben |
| 9 | Isolation |
| 10 | Ionenstrom |
| 11 | Meßschaltung |
| 12 | Referenzspannung-Erzeugungsschaltung |
| 13 | Referenzspannung-Subtrahierschaltung |
| OP | Operationsverstärker |
| R | Widerstand |
| C | Kondensator |
| T | Transistor |
| s | Schalter |
| U1 | Ausgangsspannung der Meßschaltung |
| U2 | Ausgangsspannung der Referenzspannung-Subtrahierschaltung |
| Uref | Referenzspannung |

### Patentansprüche

1. Verfahren zum Überwachen des Verbrennungsablaufs in einem Dieselmotor,
**dadurch gekennzeichnet,**
daß in einem Verbrennungsraum (1) des Dieselmotors eine Ionenstrommessung vorgenommen wird, und
daß das durch die Ionenstrommessung erfaßte Ionenstromsignal ausgewertet wird, um den Verbrennungsablauf in dem Verbrennungsraum des Dieselmotors zu ermitteln.

2. Verfahren nach Anspruch 1, **dadurch gekennzeichnet,** daß durch die Auswertung des Ionenstromsignals in dem Verbrennungsraum (1) auftretende Verbrennungsaussetzer erkannt werden.

**3.** Verfahren nach Anspruch 2, **dadurch gekennzeichnet,**
daß zur Erkennung von Verbrennungsaussetzern die lonenstromkurve des lonenstromsignals im Schleppbetrieb des Dieselmotors erfaßt und anschließend numerisch gefiltert wird, und
daß auf das Vorliegen eines Verbrennungsaussetzers geschlossen wird, falls die Amplitude der gefilterten lonenstromkurve unterhalb einer bestimmten Schwelle liegt.

**4.** Verfahren nach Anspruch 3, **dadurch gekennzeichnet,** daß als Schwelle eine lonenstromamplitude von ca. $2,5 \cdot 10^{-7}$ S verwendet wird.

**5.** Verfahren nach einem der vorhergehenden Ansprüche, dadurch gekennzeichnet, daß durch die Auswertung des lonenstromsignals der Verbrennungsbeginn und/oder die Verbrennungsdauer einer in dem Verbrennungsraum (1) ablaufenden Verbrennung erkannt wird.

**6.** Verfahren nach Anspruch 5, **dadurch gekennzeichnet,**
daß die lonenstromkurve des erfaßten lonenstromsignals ermittelt wird, und
daß der Zeitpunkt, zu dem die Amplitude der lonenstromkurve einen bestimmten Schwellenwert überschreitet, als Verbrennungsbeginn erkannt wird.

**7.** Verfahren nach Anspruch 6, **dadurch gekennzeichnet,** daß die Zeitspanne zwischen dem Zeitpunkt, zu dem die Amplitude der lonenstromkurve den bestimmten Schwellenwert überschreitet, und dem Zeitpunkt, zu dem die Amplitude der lonenstromkurve den bestimmten Schwellenwert wieder unterschreitet, als Maß für die Verbrennungsdauer ausgewertet wird.

**8.** Verfahren nach Anspruch 6 oder 7, **dadurch gekennzeichnet,** daß als Schwellenwert derjenige Amplitudenwert verwendet wird, welcher in etwa 2% des Maximums der Amplitude der lonenstromkurve entspricht.

**9.** Verfahren nach Anspruch 5, **dadurch gekennzeichnet,**
daß die lonenstromkurve des erfaßten lonenstromsignals ermittelt und davon abhängig das lonenstromintegral der lonenstromkurve gebildet wird, und
daß das lonenstromintegral ausgewertet wird, um den Verbrennungsbeginn zu erkennen.

**10.** Verfahren nach Anspruch 9, **dadurch gekennzeichnet,** daß zur Erkennung des Verbrennungsbeginnes derjenige Wert des lonenstromintegrals ausgewertet wird, welcher in etwa 2% des Maximalwerts des lonenstromintegrals entspricht.

**11.** Verfahren nach einem der Ansprüche 3 oder 6-10, **dadurch gekennzeichnet,** daß die lonenstromkurve vor ihrer Auswertung numerisch gefiltert wird, um Einflüsse, welche durch Partikelablagerungen an zur lonenstrommessung in dem Verbrennungsraum (1) verwendeten Meßsensoren (3,4) hervorgerufen werden, zu beseitigen.

**12.** Verfahren nach einem der Ansprüche 3, 4 oder 6-11, **dadurch gekennzeichnet,** daß die lonenstromkurve der über einen Kurbelwinkel (φ) aufgetragenen Amplitude des lonenstromsignals entspricht, wobei der Kurbelwinkel (φ) dem Drehwinkel einer Kurbelwelle (2) entspricht, welche einen in dem Verbrennungsraum (1) verschiebbar gelagerten Kolben (8) verschiebt.

**13.** Meßsystem zum Überwachen des Verbrennungsablaufs in einem Dieselmotor,
**dadurch gekennzeichnet,**
daß Meßsensormittel (3,4) zum Erfassen eines in einem Verbrennungsraum (1) des Dieselmotors auftretenden lonenstroms (10) vorgesehen sind, und
daß Auswertungsmittel (6) zum Auswerten des erfaßten lonenstromsignals vorgesehen sind, um davon abhängig den Verbrennungsablauf in dem Verbrennungsraum des Dieselmotors zu ermitteln.

**14.** Meßsystem nach Anspruch 13, **dadurch gekennzeichnet,** daß die Meßsensormittel (3,4) im oberen Bereich des Verbrennungsraums (1) und/oder in einem Dichtungsbereich des Verbrennungsraums (1) angeordnet sind.

**15.** Meßsystem nach Anspruch 13 oder 14, **dadurch gekennzeichnet,** daß die Meßsensormittel (3,4) eine durch eine Glühstiftkerze oder Zündkerze gebildete erste Elektrode (4) und eine durch das Gehäuse des Verbrennungsraums (1) gebildete zweite Elektrode (3) umfassen.

**16.** Meßsystem nach einem der Ansprüche 13-15, **dadurch gekennzeichnet,**
daß die Meßsensormittel (3,4) derart ausgestaltet sind, daß sie als Maß für den lonenstrom (10) den Widerstand des die Meßsensormittel (3,4) in dem Verbrennungsraum (1) umgebenden Gasgemisches erfassen, und
daß die Auswertungsmittel (6) erste Schaltungsmittel (11) zum Verstärken des von den Meßsensormitteln (3,4) gelieferten lonenstromsignals in Bezug auf eine von zweiten Schaltungsmitteln (12) bereitgestellte Referenzgröße (Uref) und dritte Schaltungsmittel (13) zum Subtrahieren der Referenzgröße (Uref) von dem Ausgangssignal der ersten Schaltungsmittel (11) umfassen, wobei das Ausgangssignal (U2) der dritten Schaltungsmittel (13) als Maß für den Ionenstrom (10) auszuwerten ist.

17. Meßsystem nach Anspruch 16, **dadurch gekennzeichnet,** daß die ersten Schaltungsmittel (11) eine gegengekoppelte nicht-invertierende Verstärkerschaltung umfassen.

18. Meßsystem nach Anspruch 16 oder 17, **dadurch gekennzeichnet,**
daß die zweiten Schaltungsmittel (12) zur Erzeugung der Referenzgröße (Uref) eine nicht-invertierende Verstärkerschaltung umfassen, und
daß die dritten Schaltungsmittel (13) eine Differenzverstärkerschaltung umfassen, wobei der Differenzverstärkerschaltung einerseits das Ausgangssignal der ersten Schaltungsmittel (11) und andererseits die von den zweiten Schaltungsmitteln (12) erzeugte Referenzgröße (Uref) zugeführt ist.

FIG. 1

FIG. 2

FIG. 3

EP 1 113 255 A2

n = 2000; me = 05 mg/Hub

(b)

(a)

-80 -60 -40 -20 0 20 40 60 80 100 120

2.5

1.25

FIG. 4a

Kurbelwinkel in °KW

n = 2000; me = 40 mg/Hub

12.5

10

7.5

5

2.5

0

(a)

(b)

-80 -60 -40 -20 0 20 40 60 80 100 120

Kurbelwinkel in °KW

n = 2000; me = 40 mg/Hub

FIG. 4c

Kurbelwinkel in °KW

n = 2000; me = 40 mg/Hub

FIG. 5

Kurbelwinkel in °KW

n = 1000; me = 25 mg/Hub

Ionenstromsignalintegral *10-6 in S*°KW

Kurbelwinkel in °KW

FIG. 6